# EUROPEAN PATENT SPECIFICATION

(11) **EP 3 473 912 B1**
(45) Date of publication and mention of the grant of the patent: **09.12.2020**
(21) Application number: 18198543.3
(22) Date of filing: 04.10.2018
(51) Int. Cl.: F16L 37/088, F16L 37/34

(54) **QUICK COUPLING**
SCHNELLKOPPLUNG
COUPLAGE RAPIDE

(30) Priority: 23.10.2017 IT 201700119860
(43) Date of publication of application: 24.04.2019
(73) Proprietor: Manuli Hydraulics Italia S.R.L., 20121 Milano (IT)
(72) Inventor: BECHIS, Luca, 20135 Milano (IT); RUSCONI, Giuseppe, 26027 Rivolta d'Adda (CR) (IT)
(74) Representative: Villanova, Massimo

(56) References cited:
- US-A1- 2004 103 946
- US-A1- 2012 297 597

## Description

### Background of the invention

The invention relates to a quick coupling, in particular a quick coupling of the type with a flat face, for hydraulic applications.

Specifically, but not exclusively, the invention refers to a quick coupling for connecting together and separating rapidly components of hydraulic systems that are usable in various environments, for example earthworks machines, agricultural machines, road maintenance, industrial uses, etc.

The prior art comprises balls bearing quick couplings that permit easy coupling and uncoupling, in which the coupling is of "push" type (i.e. this occurs by thrust by inserting the male coupling element inside the female coupling element) and decoupling occurs by retracting a ring nut. In most cases the female coupling element is provided with a device against accidental release, comprising locking balls and corresponding recesses made by milling in the ring nut. Such a coupling assembly is known from US 2004/0103946 A1.

One drawback of such balls bearing quick couplings lies in the fact that the forces produced by the pressurized fluid inside the coupling act on a limited surface, generating great local stress in the coupling parts in contact with the balls. The phenomenon of "brinelling" thus occurs, which consists of forming deep marks in the parts of the coupling in contact with the balls.

The prior art comprises screw-type rapid couplings comprising a threaded coupling between the male coupling element and the female coupling element. Such screw couplings of known type advantageously enable the previously disclosed phenomenon of "brinelling" to be eliminated.

One drawback of such screw couplings is that the coupling and uncoupling operations are long and laborious because they require operations of screwing and unscrewing the two elements that constitute the coupling.

A further drawback is linked to the risk of loosening, which can occur over time, for example through the effect of the twisting action of the flexible pipes to which the male coupling element and/or the female coupling element are connected. For this reason, screw couplings are known with an anti-unscrewing device comprising a ring nut and a ring of auxiliary balls. This anti-unscrewing device nevertheless involves a significant constructional and functional complication.

### Summary of the invention

One object of the invention consists of improving quick couplings of known type and/or solving one or more of the aforesaid drawbacks of the prior art.

Another object is to make a coupling in which the coupling between two coupling elements is of the "push" type, for example by pushing a male coupling element inside a female coupling element.

A further object of the invention is to enable the coupling to be disconnected by resorting to the use of a generic tool.

One advantage is preventing accidental disconnection of the coupling.

One advantage is to make available a quick coupling in which the retaining forces required to connect together the coupling elements are distributed on a relatively wide surface, thus reducing the plastic deformation of the surfaces of the coupling subjected to the aforesaid retaining forces.

One advantage is to provide a coupling in which the reciprocal connection of the male and female coupling elements can be performed rapidly.

One advantage is to provide a quick coupling, in particular of the type with a flat face, which is constructionally cheap and simple.

Such objects and advantages, and still others, are achieved by a coupling made according to one or more of the claims set out below.

In one embodiment, a coupling comprises a coupling element provided with retaining means that comprises an elastic ring housed in an inner annular cavity obtained on the coupling element, the elastic ring being contained externally by a cursor that is able to slide axially under the action of elastic means, at least one opening being obtained on the coupling element to enable the annular cursor to be accessed to be moved by a tool.

### Brief description of the drawings

The invention can be better understood and implemented with reference to the attached drawings that illustrate an embodiment thereof by way of non-limiting example, in which:
Figure 1 is a partially sectioned view of an embodiment of a coupling, made in accordance with the invention, in a disconnected configuration in which the two male and female elements are separated from one another;
Figure 2 is an enlarged detail of the female element of Figure 1;
Figure 3 is an enlarged detail of the male element of Figure 1;
Figures 4 and 5 show, in sequence, two steps of the connecting operation for connecting the male and female elements of the coupling of Figure 1;
Figure 6 is an enlarged detail of Figure 5;
Figure 7 shows a step of the connecting operation after the step shown in Figure 5;
Figure 8 shows a step of the disconnecting operation for disconnecting the male and female elements of the coupling of Figure 1;
Figure 9 is an enlarged detail of Figure 8;
Figure 10 shows a disconnecting operation after the step shown in Figure 8.

### Detailed description

By making reference to the aforesaid figures, with 1 overall a male coupling element was shown and with 2 a female coupling element. The coupling elements 1 and 2 are couplable with one another to form a quick coupling for hydraulic applications. The quick coupling may be, in particular, connectable and disconnectable according to a coupling axis. The quick coupling specifically disclosed here is a coupling of the type with a flat face, although the present invention can be applied to couplings of another type.

The male coupling element 1 comprises a tubular portion 3 which in turn comprises a (cylindrical) outer surface 4 on which, as in this case, an annular recess 6 (in particular in the shape of a circumferal groove or race) can be defined.

The male coupling element 1 may comprise, in particular, a blind tubular stem 8 housed inside the tubular portion 3 and movable axially with respect to the tubular portion 3. The blind tubular stem 8 may be arranged to come into contact with a central portion 14 of the female coupling element 2 (as will be explained better below) to retract axially during coupling (of the "push" type) between the two male and female coupling elements 1 and 2.

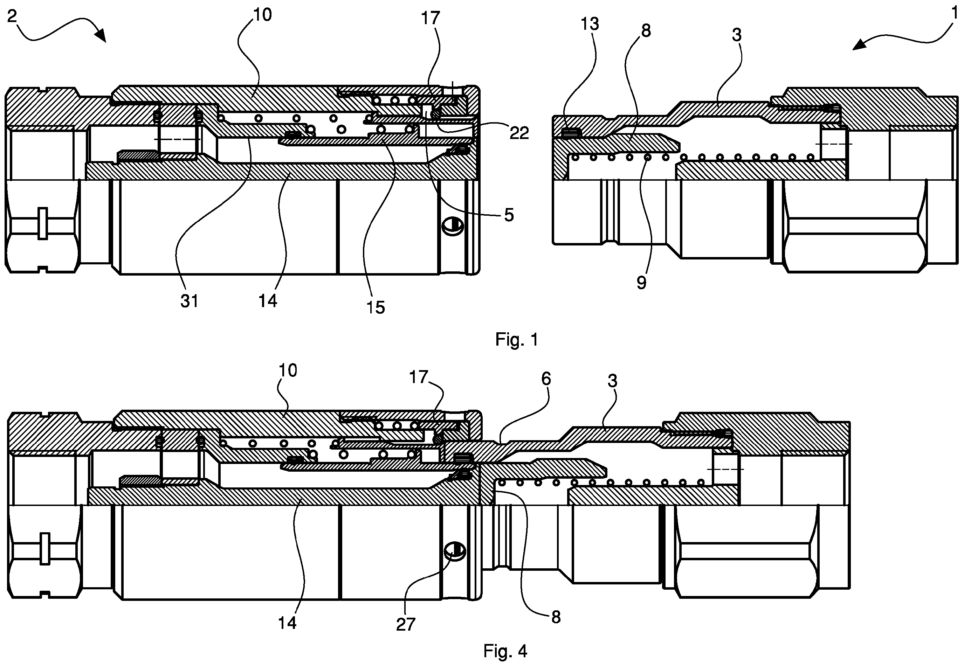

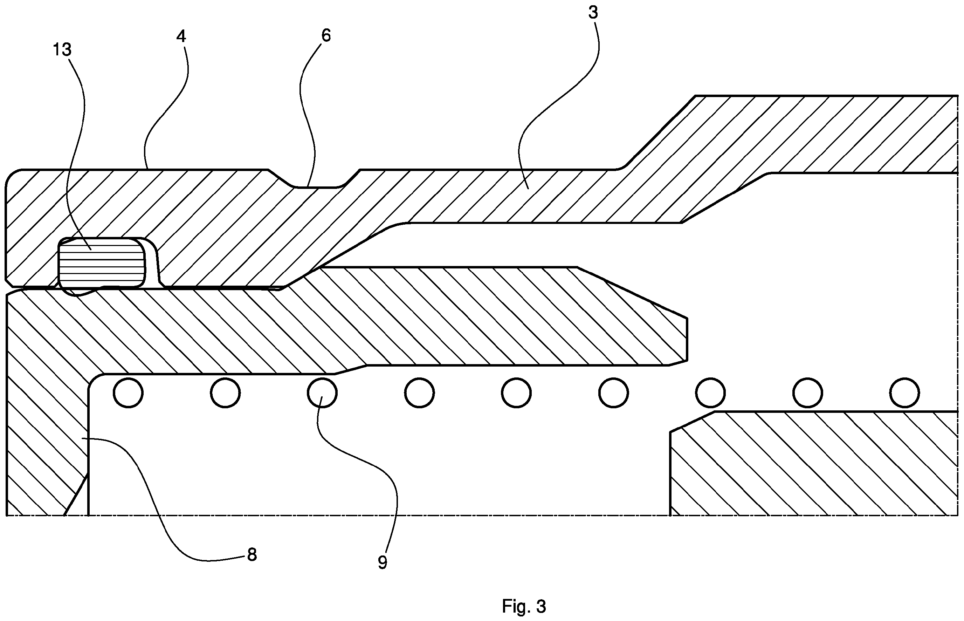

The male coupling element 1 may comprise, in particular, first elastic means 9 (for example a coil spring) arranged for pushing axially the blind tubular stem 8 to stop against the tubular portion 3, in a closed configuration of the tubular portion 3 (Figures 1 and 3), when the male coupling element 1 is not coupled with the female coupling element 2.

The female coupling element 2 comprises a tubular casing 10 comprising at least one abutting portion 19 (of annular shape) and at least one containing portion 28 (of annular shape) spaced axially apart from one another along an axis of the tubular casing 10. The abutting portion 19 and the containing portion 28 bound, as in this embodiment, an annular cavity 5 that is open inwards and suitable for housing an elastic ring 22, as will be explained better further below in the description. The tubular casing 10 is configured, as in this embodiment, to receive internally at least one part of the tubular portion 3 of the male coupling element 1.

The tubular casing 10 2- is made, as in this specific embodiment, of several portions that are coupled together. In particular, the abutting portion 19 may comprise an annular body that is distinct from the rest of the tubular casing 10. This annular body may be coupled, as in this embodiment, with a flanged portion of the tubular casing 10. The abutting portion 19 may be, in particular, distinct from the containing portion 28. It is possible, in other embodiments that are not illustrated, for the abutting portion 19 to be integrated with other parts of the tubular casing 10, for example to be integrated with the containing portion 28.

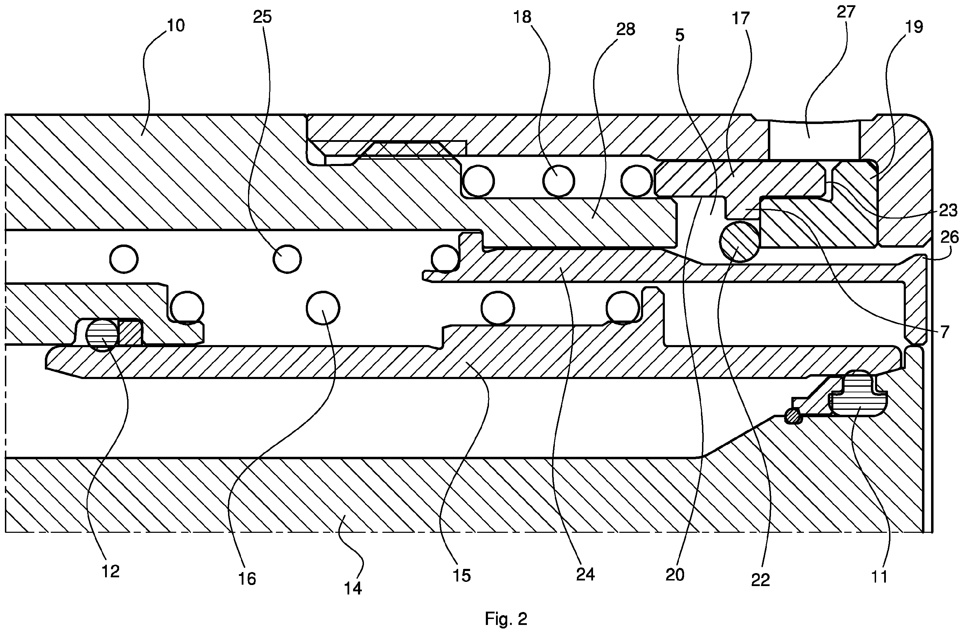

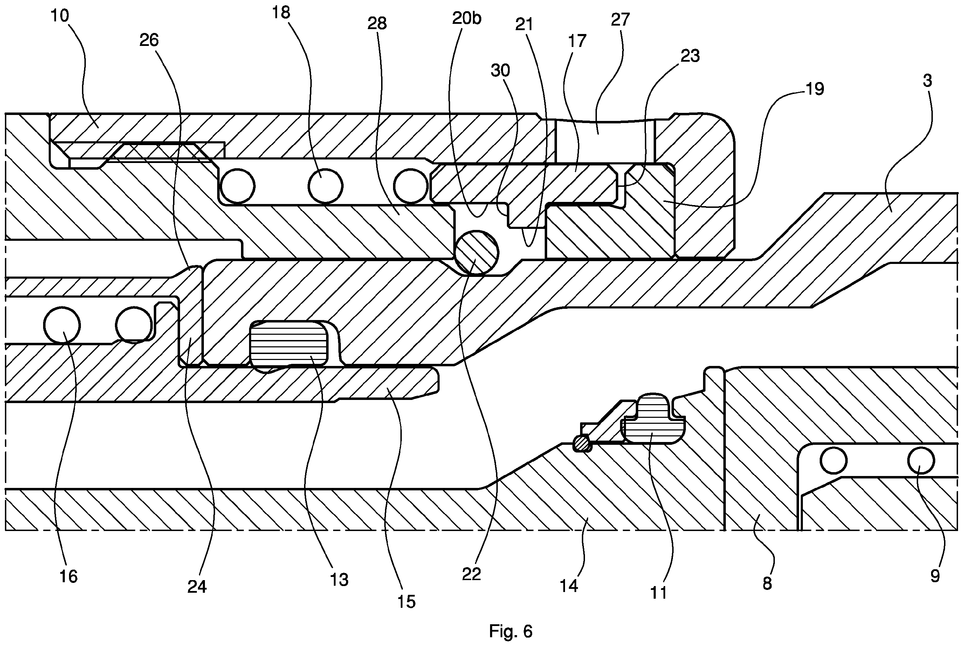

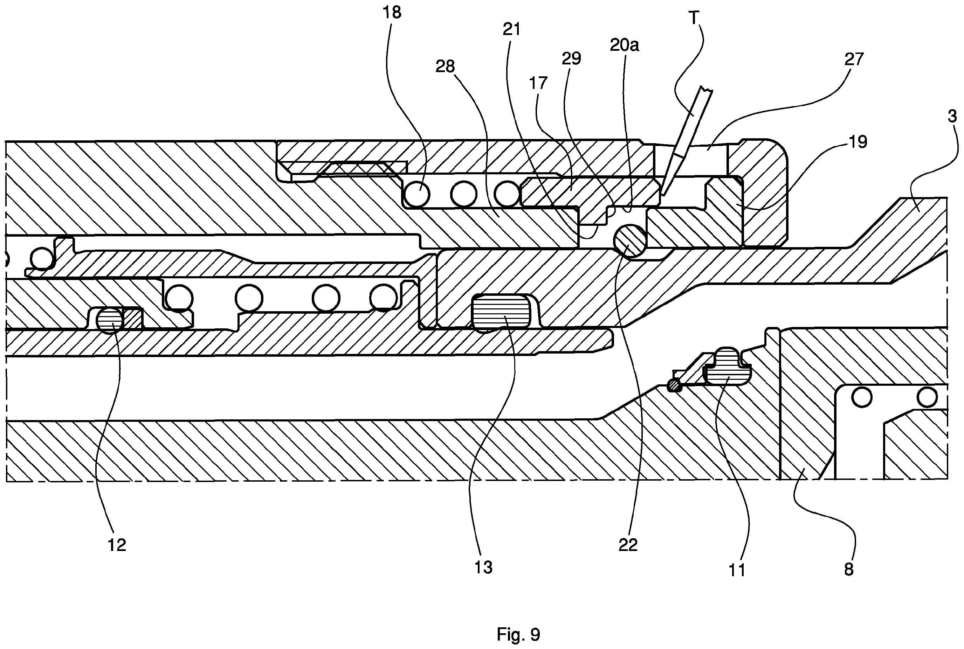

The female coupling element 2 comprises an annular cursor 17 that is arranged for closing radially to the exterior the aforesaid inner annular cavity 5. The annular cursor 17 is movable axially with respect to the tubular casing 10 with the possibility of adopting at least one advanced end of stroke position (Figures 2 and 6), and at least one retracted position (Figure 9).

In the end of stroke position the annular cursor 17 has a disengagement end 23 that is proximal to (at a certain axial distance) or in contact with the abutting portion 19. In the retracted position the aforesaid disengagement end 23 is axially further from the abutting portion 19 with respect to the end of stroke position.

The female coupling element 2 may comprise, in particular, second elastic means 18 (a spring, for example a coil spring) arranged to push the annular body 17 axially towards the end of stroke position against an abutting surface, in particular an abutting surface that is integral with the tubular casing 10, for example against the abutting portion 19.

The annular cursor 17 comprises a first inner surface 20 and a second inner surface 21 that has an inner diameter that is less than an inner diameter of the first inner surface 20. The second inner surface 21 may be arranged, in particular, on an annular protrusion 7 that protrudes radially inside from the first inner surface 20.

The first inner surface 20 comprises, as in this specific embodiment, at least two annular portions 20a and 20b arranged on two opposite sides of the second inner surface 21 in an axial direction. A first annular portion 20a is arranged on a first side of the second inner surface 21 facing the abutting portion 19. A second annular portion 20b is arranged on a second side of the second inner surface 21 facing the containing portion 28.

The second annular portion 20b may be, in particular, axially slidable on an outer surface of the containing portion 28. The first annular portion 20a may be, in particular, axially slidable on an outer surface of the abutting portion 19.

The female coupling element 2 comprises at least one locking elastic ring 22 housed in the annular cavity 5 and contained radially by the annular cursor 17. The locking elastic ring 22 may be made, in particular, of steel for springs.

The female coupling element 2 is able to adopt, as in this embodiment, at least one first configuration in which the annular cursor 17 is in the end of stroke position and the elastic ring 22 is contained radially (in a narrow or crushed configuration) by the second inner surface 21. The first configuration is shown, for example, in Figures 1, 2, 4, 7.

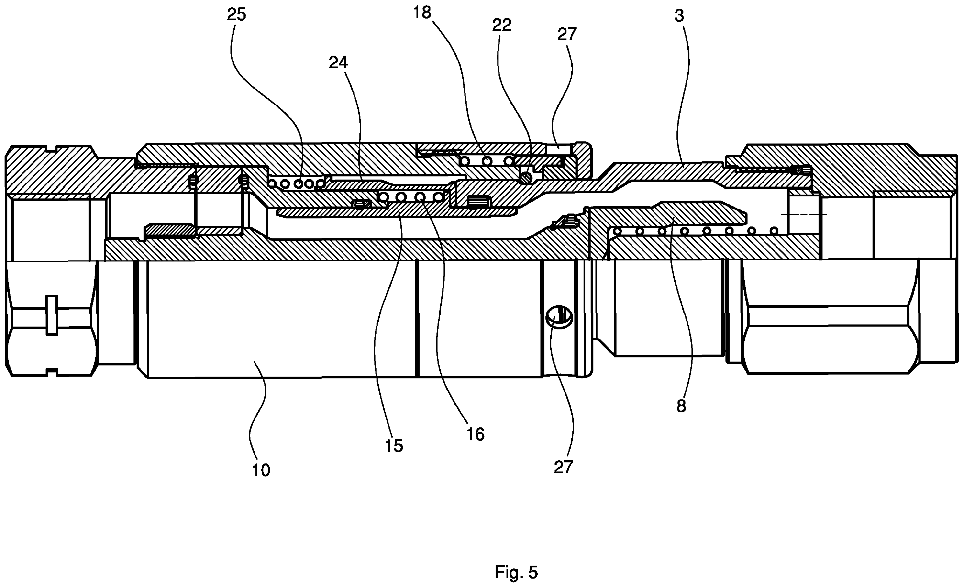

The female coupling element 2 is able to adopt, as in this embodiment, at least one second configuration in which the annular cursor 17 is in the end of stroke position and the elastic ring 22 is contained radially (in a widened configuration) by the second annular portion 20b. The second configuration is shown, for example, in Figures 5, 6.

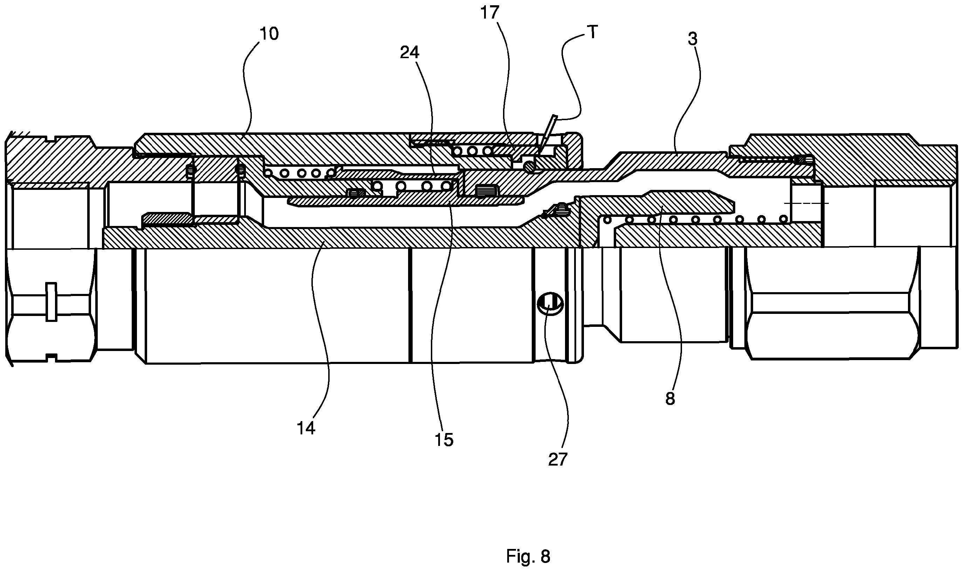

The female coupling element 2 is able to adopt, as in this embodiment, at least one third configuration in which the annular cursor 17 is in the retracted position and the elastic ring 22 is contained radially (in a widened configuration) by the first annular portion 20a. The third configuration is shown, for example, in Figures 8, 9, 10.

The tubular casing 10 2. has at least one opening 27 shaped and arranged to enable the aforesaid disengagement end 23 of the annular cursor 17 to be accessed from outside, in particular when the annular cursor 17 is in the end of stroke position, so that the forced movement of the annular cursor 17 to the retracted position is permitted or facilitated by a tool T (for example a usual screwdriver). Each opening 27 may be arranged, in particular, at an interface between the disengagement end 23 and the abutting portion 19, in such a manner as to promote access by the tool T to the zone of the aforesaid interface when the annular cursor 17 is in the end of stroke position.

The tubular casing 10 may comprise, as in this embodiment, a plurality of openings 27 arranged circumferally to permit access from the outside from several positions to the annular cursor 17 in the end of stroke position.

The disengagement end 23 may be, in particular, spaced axially away from the abutting portion 19 when the annular cursor 17 is in the end of stroke position, so as to promote insertion of the tool T into the interface between the abutting portion 19 and the annular cursor 17.

The annular cursor 17 may comprise, in particular, a first shoulder 29 comprised between the second inner surface 21 and the first annular portion 20a. The first shoulder 29 may be configured, as in this embodiment, so as to be able to abut on the abutting portion 19 when the annular cursor 17 is in the aforesaid end of stroke position.

The annular cursor 17 may comprise, in particular, a second shoulder 30 (opposite the first shoulder 29) comprised between the second inner surface 21 and the second annular portion 20b. The second shoulder 30 could be, for example, configured so as to be able to abut on the containing portion 28 during a retracting of the annular cursor 17.

The coupling may comprise, in particular, an annular protrusion 26, protruding radially outwards, that may be arranged, as in this embodiment, on the female coupling element 2. The annular protrusion 26 may comprise, as in this case, a bevel surface intended for interacting in contact with the elastic ring 22. In particular, the annular protrusion 26 may be arranged for interacting in contact with the elastic ring 22 in an insertion step of inserting the male coupling element 1 inside the female coupling element 2, so as to move axially and disengage the elastic ring 22 from the inner surface 21 of the protrusion 7, thus promoting the widening of the elastic ring 22 and promoting the transition from the aforesaid first configuration of the coupling to the aforesaid second configuration.

The female coupling element 2 may comprise, as in this specific embodiment, a bush 24 movable axially with respect to the tubular casing 10 with the possibility of adopting at least one advanced position in which it abuts on the tubular casing 10. The annular protrusion 26 may be arranged on this bush 24. In other embodiments, which are not illustrated, the annular protrusion 26 could be arranged on other portions of the female coupling element 2, or on the male coupling element 1.

The female coupling element 2 may comprise, in particular, a central portion 14 arranged at least partially inside the tubular casing 10 and fixed to the tubular casing 10. The female coupling element 2 may comprise, in particular, a sleeve 15 that surrounds at least one part of the central portion 14. The sleeve 15 may be movable axially with respect to the central portion 14 with the possibility of adopting at least one stop position against the central portion 14. The female coupling element 2 may comprise, in particular, third elastic means 16 arranged to push the sleeve 15 axially into the stop position against the central portion 14.

The female coupling element 2 may comprise, in particular, first sealing means 11 arranged to make a fluid tight seal between the sleeve 15 and the central portion 14 when the sleeve 15 is in the aforesaid stop position. The female coupling element 2 may comprise, in particular, second sealing means 12 arranged to make a fluid tight seal between the sleeve 15 and an inner surface 31 (integral with the tubular casing 10) of the female coupling element 2.

The coupling element 1 may comprise, in particular, third sealing means 13 arranged to make a fluid tight seal between the blind tubular stem 8 and the tubular portion 3 when the tubular portion 3 is in the closed configuration (with the coupling not connected). The third sealing means 13 may be used for the fluid tight seal between the female coupling element 2 and the male coupling element 1 when the coupling is connected.

The female coupling element 2 may comprise, in particular, a bush 24 that is movable axially with respect to the tubular casing 10 with the possibility of adopting at least one advanced position and at least one retracted position. The bush 24 in the advanced position may abut on the tubular casing 10. The bush 24 in the retracted position may be in contact with the sleeve 15. The female coupling element 2 may comprise, in particular, fourth elastic means 25 arranged to push the bush 24 axially to the advanced position.

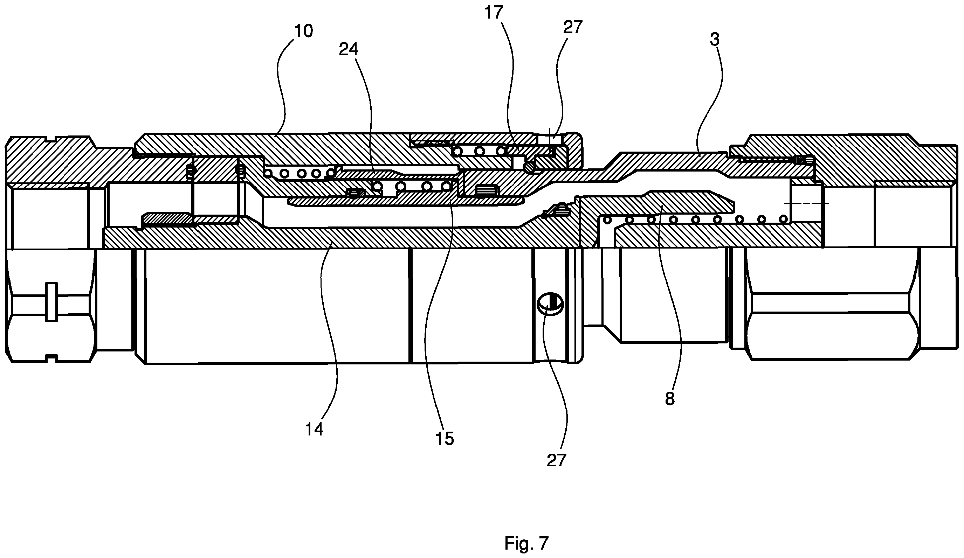

The bush 24 and the sleeve 15 may have, as in this embodiment, the possibility of adopting together a retracted configuration in which an inner path is defined for the transit of fluid between the central portion 14 and the tubular casing 10 when the coupling is connected (Figure 7).

It is provided that, in a connecting configuration between the male coupling element 1 and the female coupling element 2, the female coupling element 2 is in the aforesaid first configuration and the elastic ring 22 is retained radially between the second inner surface 21 and the annular recess 6 which, in the aforesaid connecting configuration (Figure 7), acts as a seat of the elastic ring 22.

The operation may occur in the following manner.

Some steps of the operation of connecting the coupling are shown in Figures 4 to 7. In particular, the connection may be made by inserting the male coupling element 1 inside the female coupling element 2 (Figure 4). In this specific case, in which the coupling is of the type with a flat face, the tubular portion 3 enters the tubular casing 10 retracting the bush 24, whilst the central portion 14 of the female coupling element 2 retracts the blind tubular stem 8. The bevelled annular protrusion 26 arranged on the bush 24 comes into contact with the elastic ring 22 (Figure 4) and promotes widening thereof and axial movement in the wider containing zone defined by the second annular portion 20b of the first inner surface 20. Continuing with the axial insertion of the male coupling element 1, for example as far as an end stroke situation in which the tubular portion 3 abuts on the bush 24 which in turn abuts on the sleeve 15 that, lastly, abuts on an end stroke (Figure 5), the elastic ring 22 may then fall into the annular recess 6 on the male coupling element 1 (Figures 5 and 6). At this point it is possible to release the male coupling element 1 that accordingly, in the absence of an axial insertion thrust, will retract slightly under the action of the elastic means operating inside the coupling (in particular the elastic means 9, 16 and 25), reaching the connecting configuration of the coupling (Figure 7), in which the elastic ring 22 is pressed radially crushed between the second inner surface 21 of the annular cursor 17 and the annular recess 6 of the male coupling element 1.

It should be noted that in this connecting configuration the coupling defines internally a path for the transit of fluid, which is suitably sealed, in this embodiment, by the second sealing means 12 and by the third sealing means 13.

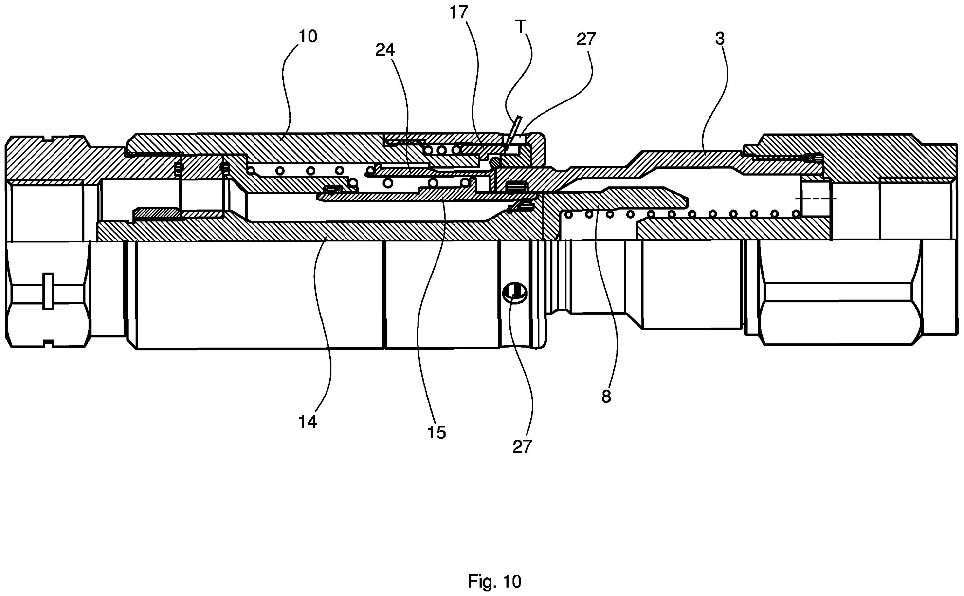

Certain steps of the disconnecting operation are shown in Figures 8 to 10. In particular, a tool T is inserted into one of the through openings 27 so that one end of the tool T can access the disengagement end 23, thus entering an interface zone between the annular cursor 17 and the abutting portion 19 of the tubular casing 10, in order to push back the annular cursor 17 in opposition with the action of the second elastic means 18 (Figures 8 and 9). In this situation the elastic ring 22 will no longer be contained radially externally from the inner surface 21, with a lesser diameter, but by the first annular portion 20a of the first inner surface 20, with a greater diameter, so that the elastic ring 22 will no longer be pressed radially in a crushed locking configuration but can be widened without retaining any longer the male coupling element 1, which can consequently be extracted from the female coupling element 2, in particular owing to the axial thrust exerted by the elastic means 9, 16 and 25 in the extraction direction (Figure 10).

It has been seen that the quick coupling disclosed above can provide a "push" type coupling between the coupling elements, through the use of a retaining element that comprises, in particular, an elastic locking ring. Uncoupling is also provided by a shifting (retraction) action of a cursor inside the coupling with the help of an outer tool. This cursor, which is able to slide under the action of elastic means, ensures, in particular, the outer containment of the retaining element (elastic locking ring).

Setting up a cursor to constrain the retaining element (elastic locking ring) enables, as has been seen, the coupling to be secured against accidental disconnection, as the retaining element is released by virtue of a shift of the aforesaid cursor, which is actuatable by the use of an outer tool, without any risk of a disconnection due to human error occurring.

It has been seen that the retaining element, which locks the coupling elements in a reciprocally locked position, comprises an elastic locking ring (in particular made of steel for springs), which enables the forces in play to be distributed over a relatively wide area, thus reducing the plastic deformation of the parts of the coupling in contact with the retaining element.

## Claims

1. Quick coupling (1; 2) comprising:
- a male coupling element (1) comprising at least one tubular portion (3) that comprises an outer surface (4) on which an annular recess (6) is defined;
- a female coupling element (2) connectable to said male coupling element (1) and comprising a tubular casing (10) configured to receive at least part of said tubular portion (3) therein; said tubular casing (10) comprising at least one abutting portion (19) and one containing portion (28) spaced apart along an axis of said tubular casing (10) and delimiting an inner annular cavity (5);
- an annular slider (17) that radially outwardly closes said annular cavity (5) and that is axially movable with respect to said tubular casing (10) with the possibility of assuming at least one end stroke position in which it has one disengagement end (23) that is proximal or in contact with said abutting portion (19) and one backward position in which said disengagement end (23) is distant from said abutting portion (19); said annular slider (17) comprising a first inner surface (20) and a second inner surface (21) that has an inner diameter less than an inner diameter of said first inner surface (20); said first inner surface (20) comprising at least two annular portions (20a, 20b) arranged on two opposite sides of said second inner surface (21) in axial direction, a first annular portion (20a) arranged on one side towards said abutting portion (19), a second annular portion (20b) arranged on one side towards said containing portion (28);
- elastic means (18) arranged to axially push said annular slider (17) towards said end stroke position;
- an elastic ring (22) housed in said annular cavity (5) and radially contained by said annular slider (17);
at least one opening (27) being provided on said tubular casing (10) for allowing access from the outside to said disengagement end (23) when said annular slider (17) is in said end stroke position to move said annular slider (17) towards said backward position;
there being provided at least one first configuration in which said annular slider (17) is in said end stroke position and said elastic ring (22) is held radially between said second inner surface (21) and said annular recess (6), at least one second configuration in which said annular slider (17) is in said end stroke position and said elastic ring (22) is radially contained by said second annular portion (20b), and at least one third configuration in which said annular slider (17) is in said backward position and said elastic ring (22) is radially contained by said first annular portion (20a).

2. Quick coupling according to claim 1, wherein:
- said second annular portion (20b) is arranged to allow an extension of said elastic ring (22) during an insertion step of said male coupling element (1) within said female coupling element (2);
- said first annular portion (20a) is arranged to allow an extension of said elastic ring (22) during an extraction step of said male coupling element (1) from said female coupling element (2).

3. Quick coupling according to claim 1 or 2, wherein said at least one opening (27) is arranged at an interface between said disengagement end (23) and said abutting portion (19) to facilitate access to said interface when said annular slider (17) is in said end stroke position.

4. Quick coupling according to any one of the preceding claims, wherein said disengagement end (23) is spaced from said abutting portion (19) when said annular slider (17) is in said end stroke position.

5. Quick coupling according to any one of the preceding claims, wherein said annular slider (17) comprises a first shoulder (29) between said second inner surface (21) and said first annular portion (20a), said first shoulder (29) being configured so as to be able to abut against said abutting portion (19) when said annular slider (17) is in said end stroke position.

6. Quick coupling according to any one of the preceding claims, wherein said annular slider (17) comprises a second shoulder (30) between said second inner surface (21) and said second annular portion (20b).

7. Quick coupling according to claim 6, wherein said second shoulder (30) is configured so as to be able to abut against said containing portion (28) during retraction of said annular slider (17).

8. Quick coupling according to any one of the preceding claims, comprising a beveled annular protrusion (26) that protrudes radially outwardly, said annular protrusion (26) being arranged to interact in contact with said elastic ring (22) so as to move it axially and to promote the passage from said first configuration to said second configuration.

9. Quick coupling according to claim 6, comprising a bush (24) that is axially movable with respect to said tubular casing (10) with the possibility of assuming at least one advanced position in which it abuts against said tubular casing (10), said annular protrusion (26) being arranged on said bush (24).

10. Quick coupling according to any one of the preceding claims, wherein said tubular casing (10) comprises a plurality of openings (27) arranged circumferentially to allow access from outside from multiple positions to said annular slider (17) in said end stroke position.

11. Quick coupling according to any one of the preceding claims, wherein said second annular portion (20b) is axially slidable on an outer surface of said containing portion (28).

12. Quick coupling according to any one of the preceding claims, wherein said first annular portion (20a) is axially slidable on an outer surface of said abutting portion (19).

13. Quick coupling according to any one of the preceding claims, wherein said female coupling element (2) comprises:
- a central portion (14) arranged at least partially within said tubular casing (10) and integral with said tubular casing (10);
- a sleeve (15) that surrounds at least a portion of said central portion (14), said sleeve (15) being axially movable with respect to said central portion (14) with the possibility of assuming a stop position against said central portion (14);
- elastic means (16) arranged to axially push said sleeve (15) in said stop position;
- sealing means (11) arranged to seal between said sleeve (15) and said central portion (14) when said sleeve (15) is in said stop position;
- sealing means (12) arranged to seal between said sleeve (15) and an inner surface of said female coupling element (2).

14. Quick coupling according to claim 13, wherein said female coupling element (2) comprises:
- a bush (24) that is axially movable with respect to said tubular casing (10) with the possibility of assuming at least one advanced position in which it abuts against said tubular casing (10), and at least one backward position in which it is in contact with said sleeve (15), said bush (24) and said sleeve (15) being able to together assume a backward configuration in which an internal path for fluid passage is defined between said central portion (14) and said tubular casing (10);
- elastic means (25) arranged to axially push said bush (24) towards said advanced position;

15. Quick coupling according to any one of the preceding claims, wherein said male coupling element (1) comprises:
- a blind tubular stem (8) housed within said tubular portion (3) and axially movable with respect to said tubular portion (3), said blind tubular stem (8) being arranged to come into contact with a central portion (14) of said female coupling element (2) to axially retract during a coupling phase between said male and female coupling elements;
- elastic means (9) arranged to axially push said blind tubular stem (8) against said tubular portion (3) in a closure configuration of said tubular portion (3) when said male coupling element (1) is not coupled with said female plug element (2);
- sealing means (13) arranged to seal between said blind tubular stem (8) and said tubular portion (3) when said tubular portion (3) is in said closure configuration.

## Patentansprüche

1. Schnellkupplung (1; 2) mit:
- einem männlichen Kupplungselement (1), das wenigstens einen rohrförmigen Abschnitt (3) aufweist, der eine Außenfläche (4) besitzt, an der eine ringförmige Vertiefung (6) definiert ist;
- einem weiblichen Kupplungselement (2), das mit dem männlichen Kupplungselement (1) verbindbar ist und das ein rohrförmiges Gehäuse (10) aufweist, das ausgebildet ist, wenigstens einen Teil des rohrförmigen Abschnittes (3) darin aufzunehmen; wobei das rohrförmige Gehäuse (10) wenigstens einen anliegenden Bereich (19) und einen aufnehmenden Bereich (28) aufweist, der entlang einer Achse des rohrförmigen Gehäuses (10) beabstandet ist und einen inneren ringförmigen Hohlraum (5) begrenzt;
- einem ringförmigen Schieber (17), der den ringförmigen Hohlraum (5) radial außen abschließt und der axial beweglich ist in Bezug auf das rohrförmige Gehäuse (10), mit der Möglichkeit, wenigstens eine Endhubposition einzunehmen, in welcher er ein Löseende (23) hat, das proximal oder in Kontakt mit dem anliegenden Bereich (19) ist, und eine rückwärtige Position, in welcher das Löseende (23) von dem anliegenden Bereich (19) beabstandet ist; wobei der ringförmige Schieber (17) eine erste Innenfläche (20) und eine zweite Innenfläche (21) aufweist, die einen Innendurchmesser hat, der geringer als ein Innendurchmesser der ersten Innenfläche (20) ist; wobei die erste Innenfläche (20) wenigsten zwei ringförmige Bereiche (20a, 20b) aufweist, die auf gegenüberliegenden Seiten der zweiten Innenfläche (21) in axialer Richtung angeordnet sind, wobei ein erster ringförmiger Bereich (20a) auf einer Seite dem anliegenden Bereich (19) zugewandt angeordnet ist, und wobei ein zweiter ringförmiger Bereich (20b) auf einer Seite dem aufnehmenden Bereich (28) zugewandt angeordnet ist;
- einem elastischen Mittel (18), das angeordnet ist, um den ringförmigen Schieber (17) axial zu der Endhubposition zu drücken;
- einem elastischen Ring (22), der in dem ringförmigen Hohlraum (5) aufgenommen ist und radial von dem ringförmigen Schieber (17) gehalten ist;
wobei wenigstens eine Öffnung (27) an dem rohrförmigen Gehäuse (10) vorgesehen ist, um einen Zugang zu der Außenseite des Löseendes (23) zu erlauben, wenn der ringförmige Schieber (17) in der genannten Endhubposition ist, um den ringförmigen Schieber (17) zu der rückwärtigen Position hin zu bewegen;
wobei wenigstens eine erste Konfiguration vorgesehen ist, in welcher der ringförmige Schieber (17) in der genannten Endhubposition ist und der elastische Ring (22) radial zwischen der zweiten Innenfläche (21) und der der ringförmigen Vertiefung (6) gehalten ist, wobei wenigstens eine zweite Konfiguration vorgesehen ist, in welcher der ringförmige Schieber (17) in der genannten Endhubposition ist und der elastische Ring (22) radial von dem zweiten ringförmigen Bereich (20b) aufgenommen ist, und wenigstens eine dritte Konfiguration vorgesehen ist, in welcher der ringförmige Schieber (17) in der genannten rückwärtigen Position ist und der elastische Ring (22) radial von dem ersten ringförmigen Bereich (20a) aufgenommen ist.

2. Schnellkupplung nach Anspruch 1, in der:
- der zweite ringförmige Bereich (20b) angeordnet ist, um ein Ausziehen des elastischen Rings (22) während eines Einführschrittes des männlichen Kupplungselementes (1) in das weibliche Kupplungselement (2) während eines Einführschrittes zu erlauben;
- der erste ringförmige Bereich (20a) angeordnet ist, um ein Ausziehen des elastischen Rings (22) während eines Herausziehschrittes des männlichen Kupplungselementes (1) aus dem weiblichen Kupplungselement (2) zu erlauben.

3. Schnellkupplung nach Anspruch 1 oder 2, bei der wenigstens eine Öffnung (27) an einer Grenzfläche zwischen dem Löseende (23) und dem anliegenden Bereich (19) angeordnet ist, um einen Zugang zu der Grenzfläche zu erleichtern, wenn der ringförmige Schieber (17) in der genannten Endhubposition ist.

4. Schnellkupplung nach irgendeinem der vorhergehenden Ansprüche, bei der das Löseende (23) von dem anliegenden Bereich (19) beabstandet ist, wenn der ringförmige Schieber (17) in der Endhubposition ist.

5. Schnellkupplung nach irgendeinem der vorhergehenden Ansprüche, bei der der ringförmige Schieber (17) eine erste Schulter (29) zwischen der zweiten Innenfläche (21) und dem ersten ringförmigen Bereich (20a) aufweist, wobei die erste Schulter (29) dazu ausgebildet ist, in der Lage zu sein, an dem anliegenden Bereich (19) anzuliegen, wenn der ringförmige Schieber (17) in der genannten Endhubposition ist.

6. Schnellkupplung nach irgendeinem der vorhergehenden Ansprüche, bei der der ringförmige Schieber (17) eine zweite Schulter (30) zwischen der zweiten Innenfläche (21) und dem zweiten ringförmigen Bereich (20b) aufweist.

7. Schnellkupplung nach Anspruch 6, bei der die zweite Schulter (30) dazu ausgebildet ist, in der Lage zu sein, an dem aufnehmenden Bereich (28) während des Zurückziehens des ringförmigen Schiebers (17) anzuliegen.

8. Schnellkupplung nach irgendeinem der vorhergehenden Ansprüche, die einen schrägen ringförmigen Vorsprung (26) aufweist, der radial nach außen hervorsteht, wobei der ringförmige Vorsprung (26) dazu ausgebildet ist, in Kontakt mit dem elastischen Ring (22) zusammenzuwirken, um diesen axial zu bewegen und den Übergang von der ersten Konfiguration in die zweite Konfiguration zu unterstützen.

9. Schnellkupplung nach Anspruch 6, umfassend eine Büchse (24), die axial in Bezug auf das rohrförmige Gehäuse (10) mit der Möglichkeit beweglich ist, wenigstens eine Vorwärtsposition einzunehmen, in der sie an dem rohrförmigen Gehäuse (10) anliegt, wobei der ringförmige Vorsprung (26) auf der Büchse (24) angeordnet ist.

10. Schnellkupplung nach irgendeinem der vorhergehenden Ansprüche, bei der das rohrförmige Gehäuse (10) eine Mehrzahl von Öffnungen (27) aufweist, die umfangsmäßig angeordnet sind, um einen Zugang von außen aus einer Mehrzahl von Positionen zu dem ringförmigen Schieber (17) in der genannten Endhubposition zu erlauben.

11. Schnellkupplung nach irgendeinem der vorhergehenden Ansprüche, bei der der zweite ringförmige Bereich (20b) axial auf einer Außenfläche der auf den aufnehmenden Bereich (28) verschiebbar ist.

12. Schnellkupplung nach irgendeinem der vorhergehenden Ansprüche, bei der erste ringförmige Bereich (20a) axial auf einer Außenfläche des anliegenden Bereiches (19) verschiebbar ist.

13. Schnellkupplung nach irgendeinem der vorhergehenden Ansprüche, bei der das weibliche Kupplungselement (2) Folgendes aufweist:
- einen mittigen Bereich (14), der wenigstens teilweise innerhalb des rohrförmigen Gehäuses (10) angeordnet ist und einstückig mit dem rohrförmigen Gehäuse (10) ist;
- eine Hülse (15), die wenigstens einen Teil des mittigen Bereiches (14) umschließt, wobei die Hülse (15) axial in Bezug auf den mittigen Bereich (14) beweglich ist, mit der Möglichkeit, eine Stoppposition gegen den mittigen Bereich (14) einzunehmen;
- ein elastisches Mittel (16), das angeordnet ist, die Hülse (15) axial in die Stoppposition zu drücken;
- ein Dichtungsmittel (11), das angeordnet ist, um zwischen der Hülse (15) und dem mittigen Bereich (14) abzudichten, wenn die Hülse (15) in der genannten Stoppposition ist;
- ein Dichtungsmittel (12), das angeordnet ist, um zwischen der Hülse (15) und einer Innenfläche des weiblichen Kupplungselementes (2) abzudichten.

14. Schnellkupplung nach Anspruch 13, bei der das weibliche Kupplungselement (2) Folgendes aufweist:
- eine Büchse (24), die axial in Bezug auf das rohrförmige Gehäuse (10) beweglich ist, mit der Möglichkeit, wenigstens eine Vorwärtsposition einzunehmen, in welcher sie an dem rohrförmigen Gehäuse (10) anliegt, sowie wenigstens eine rückwärtige Position, in welcher sie in Kontakt mit der Hülse (15) ist, wobei die Büchse (24) und die Hülse (15) in der Lage sind, gemeinsam eine rückwärtige Konfiguration einzunehmen, in welcher ein innerer Weg für einen Fluiddurchlass zwischen dem mittigen Bereich (14) und dem rohrförmigen Gehäuse (10) definiert ist;
- ein elastisches Mittel (25), das angeordnet ist, die Büchse (24) axial in Richtung auf die Vorwärtsposition zu drücken;

15. Schnellkupplung nach irgendeinem der vorhergehenden Ansprüche, bei der das männliche Kupplungselement (1) Folgendes aufweist:
- einen blinden rohrförmigen Stiel (8), der in dem rohrförmigen Abschnitt (3) aufgenommen ist und axial in Bezug auf den rohrförmigen Abschnitt (3) beweglich ist, wobei der blinde rohrförmige Stiel (8) angeordnet ist, um in Kontakt mit einem mittigen Bereich (14) des weiblichen Kupplungselementes (2) zu gelangen, um sich axial während einer Kupplungsphase zwischen dem männlichen und dem weiblichen Kupplungselement zurückzuziehen;
- ein elastisches Mittel (9), das angeordnet ist, den blinden rohrförmigen Stiel (8) axial gegen den rohrförmigen Abschnitt (3) in einer geschlossenen Konfiguration des rohrförmigen Abschnittes (3) zu drücken, wenn das männliche Kupplungselement (1) nicht mit dem weiblichen Kupplungselement (2) gekoppelt ist;
- ein Dichtungsmittel (13), das angeordnet ist, zwischen dem blinden rohrförmigen Stiel (8) und dem rohrförmigen Abschnitt (3) abzudichten, wenn der rohrförmige Abschnitt (3) in der geschlossenen Konfiguration ist.

## Revendications

1. Raccord rapide (1 ; 2) comprenant :
- un élément de raccord mâle (1) comprenant au moins une partie tubulaire (3) qui comprend une surface extérieure (4) sur laquelle est défini un creux annulaire (6) ;
- un élément de raccord femelle (2) apte à être relié audit élément de raccord mâle (1) et comprenant une enveloppe tubulaire (10) configurée pour recevoir à l'intérieur une partie au moins de ladite partie tubulaire (3) ; ladite enveloppe tubulaire (10) comprenant au moins une partie de butée (19) et une partie contenante (28) espacées le long d'un axe de ladite enveloppe tubulaire (10) et délimitant une cavité annulaire intérieure (5) ;
- un coulisseau annulaire (17) qui ferme radialement vers l'extérieur ladite cavité annulaire (5) et qui est mobile axialement par rapport à ladite enveloppe tubulaire (10) avec la possibilité d'adopter au moins une position de fin de course dans laquelle il a une extrémité de dégagement (23) qui est proche de ladite partie de butée (19) ou en contact avec celle-ci, et une position arrière dans laquelle ladite extrémité de dégagement (23) est éloignée de ladite partie de butée (19) ; ledit coulisseau annulaire (17) comprenant une première surface intérieure (20) et une deuxième surface intérieure (21) qui a un diamètre intérieur inférieur à un diamètre intérieur de ladite première surface intérieure (20) ; ladite première surface intérieure (20) comprenant au moins deux parties annulaires (20a, 20b) disposées sur deux côtés opposés de ladite deuxième surface intérieure (21) dans la direction axiale, une première partie annulaire (20a) disposée sur un côté vers ladite partie de butée (19), une deuxième partie annulaire (20b) disposée sur un côté vers ladite partie contenante (28) ;
- des moyens élastiques (18) disposés pour pousser axialement ledit coulisseau annulaire (17) vers ladite position de fin de course ;
- une bague élastique (22) logée dans ladite cavité annulaire (5) et contenue radialement par ledit coulisseau annulaire (17) ;
au moins une ouverture (27) étant prévue sur ladite enveloppe tubulaire (10) pour permettre un accès, de l'extérieur, à ladite extrémité de dégagement (23) quand ledit coulisseau annulaire (17) est dans ladite position de fin de course pour déplacer ledit coulisseau annulaire (17) vers ladite position arrière ;
au moins une première configuration étant prévue dans laquelle ledit coulisseau annulaire (17) est dans ladite position de fin de course et ladite bague élastique (22) est maintenue radialement entre ladite deuxième surface intérieure (21) et ledit creux annulaire (6), une deuxième configuration dans laquelle ledit coulisseau annulaire (17) est dans ladite position de fin de course et ladite bague élastique (22) est contenue radialement par ladite deuxième partie annulaire (20b), et au moins une troisième configuration dans laquelle ledit coulisseau annulaire (17) est dans ladite position arrière et ladite bague élastique (22) est contenue radialement par ladite première partie annulaire (20a).

2. Raccord rapide selon la revendication 1, dans lequel :
- ladite deuxième partie annulaire (20b) est disposée pour permettre une extension de ladite bague élastique (22) pendant une étape d'insertion de l'élément de raccord mâle (1) à l'intérieur de l'élément de raccord femelle (2) ;
- ladite première partie annulaire (20a) est disposée pour permettre une extension de ladite bague élastique (22) pendant une étape d'extraction dudit élément de raccord mâle (1) dudit élément de raccord femelle (2).

3. Raccord rapide selon la revendication 1 ou 2, dans lequel ladite au moins une ouverture (27) est disposée à une interface entre ladite extrémité de dégagement (23) et ladite partie de butée (19) pour faciliter l'accès à ladite interface quand ledit coulisseau annulaire (17) est dans ladite position de fin de course.

4. Raccord rapide selon l'une quelconque des revendications précédentes, dans lequel ladite extrémité de dégagement (23) est espacée de ladite partie de butée (19) quand ledit coulisseau annulaire (17) est dans ladite position de fin de course.

5. Raccord rapide selon l'une quelconque des revendications précédentes, dans lequel ledit coulisseau annulaire (17) comprend un premier épaulement (29) entre ladite deuxième surface intérieure (21) et ladite première partie annulaire (20a), ledit premier épaulement (29) étant configuré de manière à pouvoir buter contre ladite partie de butée (19) quand ledit coulisseau annulaire (17) est dans ladite position de fin de course.

6. Raccord rapide selon l'une quelconque des revendications précédentes, dans lequel ledit coulisseau annulaire (17) comprend un deuxième épaulement (30) entre ladite deuxième surface intérieure (21) et ladite deuxième partie annulaire (20b).

7. Raccord rapide selon la revendication 6, dans lequel ledit deuxième épaulement (30) est configuré pour pouvoir buter contre ladite partie contenante (28) pendant la rétraction dudit coulisseau annulaire (17).

8. Raccord rapide selon l'une quelconque des revendications précédentes, comprenant une saillie annulaire biseautée (26) qui fait saillie radialement vers l'extérieur, ladite saillie annulaire (26) étant disposée pour interagir en contact avec ladite bague élastique (22) de manière à la déplacer axialement et à favoriser le passage de ladite première configuration à ladite deuxième configuration.

9. Raccord rapide selon la revendication 6, comprenant une douille (24) qui est mobile axialement par rapport à ladite enveloppe tubulaire (10), avec la possibilité d'adopter au moins une position avancée dans laquelle elle bute contre ladite enveloppe tubulaire (10), ladite saillie 26) étant disposée sur ladite douille (24).

10. Raccord rapide selon l'une quelconque des revendications précédentes, dans lequel ladite enveloppe tubulaire (10) comprend une pluralité d'ouvertures (27) disposées circonférentiellement pour permettre l'accès, de l'extérieur, depuis de multiples positions audit coulisseau annulaire (17) dans ladite position de fin de course.

11. Raccord rapide selon l'une quelconque des revendications précédentes, dans lequel ladite deuxième partie annulaire (20b) est apte à coulisser axialement sur une surface extérieure de ladite partie contenante (28).

12. Raccord rapide selon l'une quelconque des revendications précédentes, dans lequel ladite première partie annulaire (20a) est apte à coulisser axialement sur une surface extérieure de ladite partie de butée (19).

13. Raccord rapide selon l'une quelconque des revendications précédentes, dans lequel ledit élément de raccord femelle (2) comprend :
- une partie centrale (14) disposée au moins partiellement à l'intérieur de ladite enveloppe tubulaire (10) et d'un seul tenant avec ladite enveloppe tubulaire (10) ;
- un manchon (15) qui entoure une partie au moins de ladite partie centrale (14), ledit manchon (15) étant mobile axialement par rapport à ladite partie centrale (14) avec la possibilité d'adopter une position d'arrêt contre ladite partie centrale (14) ;
- des moyens élastiques (16) disposés pour pousser axialement ledit manchon (15) dans ladite position d'arrêt ;
- des moyens d'étanchéité (11) disposés pour réaliser une étanchéité entre ledit manchon (15) et ladite partie centrale (14) quand ledit manchon (15) est dans ladite position d'arrêt ;
- des moyens d'étanchéité (12) disposés pour réaliser une étanchéité entre ledit manchon (15) et une surface intérieure dudit élément de raccord femelle (2).

14. Raccord rapide selon la revendication 13, dans lequel ledit élément de raccord femelle (2) comprend :
- une douille (24) qui est mobile axialement par rapport à ladite enveloppe tubulaire (10) avec la possibilité d'adopter au moins une position avancée dans laquelle elle bute contre ladite enveloppe tubulaire (10), et au moins une position arrière dans laquelle elle est en contact avec ledit manchon (15), ladite douille (24) et ledit manchon (15) pouvant adopter ensemble une configuration arrière dans laquelle une trajectoire interne pour le passage de fluide est définie entre ladite partie centrale (14) et ladite enveloppe tubulaire (10),
- des moyens élastiques (25) disposés pour pousser axialement ladite douille vers ladite position avancée.

15. Raccord rapide selon l'une quelconque des revendications précédentes, dans lequel ledit élément de raccord mâle (1) comprend :
- une tige tubulaire aveugle (8) logée à l'intérieur de ladite partie tubulaire (3) et mobile axialement par rapport à ladite partie tubulaire (3), ladite tige tubulaire aveugle (8) étant disposée pour venir en contact avec une partie centrale (14) dudit élément de raccord femelle (2) pour se rétracter axialement pendant une phase de raccordement entre lesdits élément de raccord mâle et femelle ;
- des moyens élastiques (9) disposés pour pousser axialement ladite tige tubulaire aveugle (8) contre ladite partie tubulaire (3) dans une configuration de fermeture de ladite partie tubulaire (3) quand ledit élément de raccord mâle (1) n'est pas raccordé audit élément de bouchon femelle (2) ;
- des moyens d'étanchéité (13) disposés pour réaliser une étanchéité entre ladite tige tubulaire aveugle (8) et ladite partie tubulaire (3) quand ladite partie tubulaire (3) est dans ladite configuration de fermeture.
